(19) **Europäisches Patentamt**
**European Patent Office**
**Office européen des brevets**

(11) **EP 4 697 822 A1**

(12) **EUROPEAN PATENT APPLICATION**
published in accordance with Art. 153(4) EPC

(43) Date of publication:
**18.02.2026 Bulletin 2026/08**

(21) Application number: **23933076.4**

(22) Date of filing: **14.04.2023**

(51) International Patent Classification (IPC):
**H04W 52/32** (2009.01)

(52) Cooperative Patent Classification (CPC):
**H04W 52/32**

(86) International application number:
**PCT/JP2023/015223**

(87) International publication number:
**WO 2024/214300 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**
• **MATSUMURA, Yuki**
**Tokyo 100-6150 (JP)**
• **NAGATA, Satoshi**
**Tokyo 100-6150 (JP)**
• **WANG, Jing**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a receiving section that receives a configuration indicating that different Sounding Reference Signal (SRS) ports are mapped to different Orthogonal Frequency Division Multiplexing (OFDM) symbols, and a control section that equally divides transmission power of SRS by a specific unit. According to one aspect of the present disclosure, it is possible to appropriately perform SRS transmission using more than four SRS ports.

FIG. 3

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In 3GPP Rel. 15/16, the maximum number of layers in UL is four, and the maximum number of sounding reference signal (SRS) ports is also four. Therefore, UL transmission is implemented by a simple relationship between a layer and a port of an uplink (UL) channel/signal (PUSCH/SRS).

For future radio communication systems (for example, 3GPP Rel. 18 and later versions), supporting more than four layers in UL transmission from a terminal (user terminal, User Equipment (UE)) is under study. However, various configurations and the like in a case of supporting SRS ports of more than four ports are not clarified. For example, transmission power control of the SRS is not clarified. This may prevent SRS transmission using more than four SRS ports from being appropriately performed.

Thus, an object of the present disclosure is to provide a terminal, a radio communication method, and a base station that can appropriately perform SRS transmission using more than four SRS ports.

Solution to Problem

A terminal according to one aspect of the present disclosure includes a receiving section that receives a configuration indicating that different Sounding Reference Signal (SRS) ports are mapped to different Orthogonal Frequency Division Multiplexing (OFDM) symbols, and a control section that equally divides transmission power of SRS by a specific unit.

Advantageous Effects of Invention

According to one aspect of the present disclosure, it is possible to appropriately perform SRS transmission using more than four SRS ports.

Brief Description of Drawings

[FIG. 1] FIG. 1 shows an example of an SRS resource set configuration information element.
[FIG. 2] FIG. 2 shows an example of an SRS resource configuration information element.

[FIG. 3] FIG. 3 shows an example of port distribution to which TDM is applied.

[FIG. 4] FIG. 4 shows an example of a power amplifier circuit in a UE.

[FIG. 5] FIG. 5 shows an example of SRS transmission power for each port in a plurality of cases.

[FIG. 6] FIG. 6 shows an example of a fifth embodiment.

[FIG. 7] FIG. 7 is a diagram to show an example of a schematic structure of a radio communication system according to one embodiment.

[FIG. 8] FIG. 8 is a diagram to show an example of a structure of a base station according to one embodiment.

[FIG. 9] FIG. 9 is a diagram to show an example of a structure of a user terminal according to one embodiment.

[FIG. 10] FIG. 10 is a diagram to show an example of a hardware structure of the base station and the user terminal according to one embodiment.

[FIG. 11] FIG. 11 is a diagram to show an example of a vehicle according to one embodiment.

Description of Embodiments

(SRS)

In NR, a reference signal for measurement (Sounding Reference Signal (SRS)) is used for a wide variety of usage. The SRS in NR is used not only for uplink (UL) CSI measurement used in existing LTE (LTE Rel. 8 to Rel. 14) but also for downlink (DL) CSI measurement, beam management, and the like.

The UE may be configured with one or a plurality of SRS resources. The SRS resource may be specified by an SRS resource index (SRI).

Each SRS resource may include one or a plurality of SRS ports (or may correspond to one or a plurality of SRS ports). For example, the number of ports per SRS may be 1, 2, 4, or the like.

The UE may be configured with one or a plurality of SRS resource sets. One SRS resource set may relate to a given number of SRS resources. The UE may use the higher layer parameter in common for the SRS resources included in one SRS resource set. Note that the resource set in the present disclosure may be interpreted as a set, a resource group, a group, and the like.

Information related to the SRS resource or resource set may be configured for the UE by using higher layer signaling, physical layer signaling, or a combination thereof.

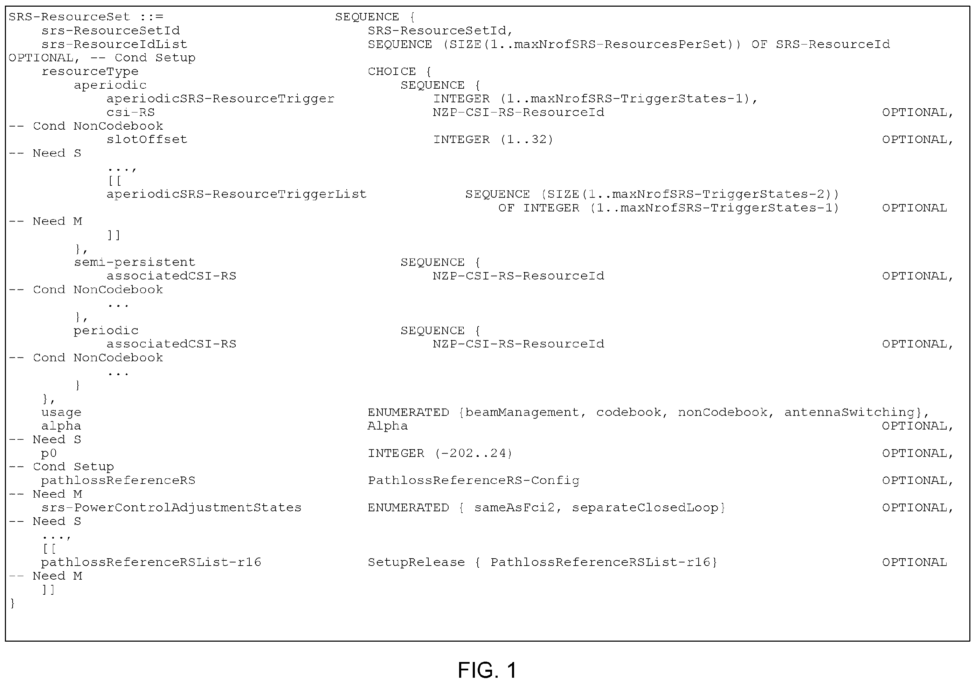

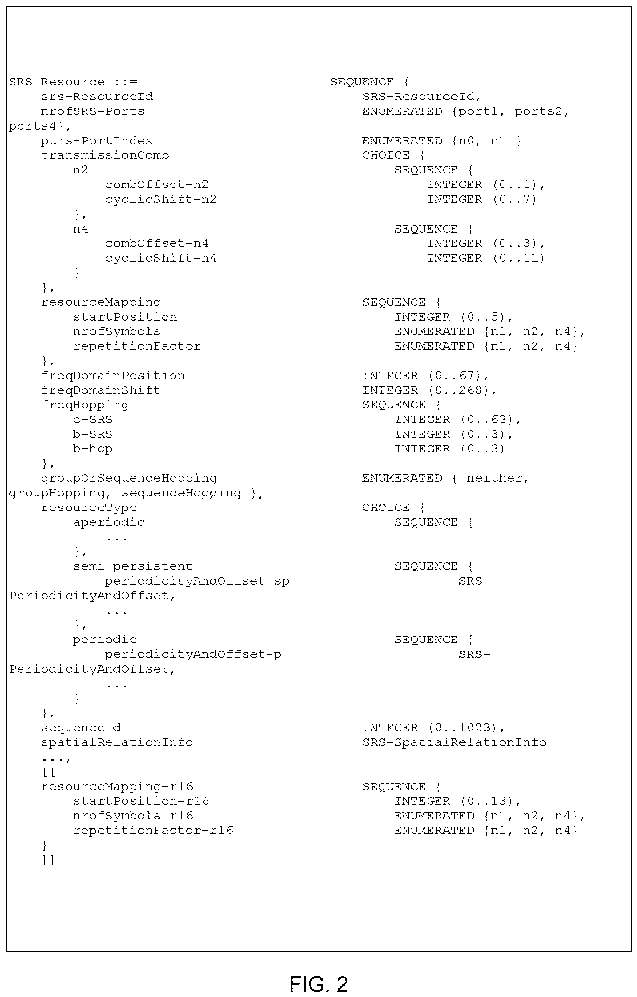

An SRS configuration information element (for example, "SRS-Config" of an RRC information element) may include an SRS resource set configuration information element (FIG. 1), an SRS resource configuration information element (FIG. 2), or the like.

The SRS resource set configuration information element (for example, "SRS-ResourceSet" of the RRC parameter) may include an SRS resource set ID (Identifier) (SRS-ResourceSetId), a list of SRS resource IDs (SRS-ResourceIds) used in the resource set, an SRS resource type (resourceType), and information of usage of the SRS.

Here, the SRS resource type may indicate time domain behavior (same time domain behavior) of the SRS resource configuration, and may indicate any of a periodic SRS (P-SRS), a semi-persistent SRS (SP-SRS), and an aperiodic SRS (A(AP)-SRS). Note that the UE may periodically (or periodically after activation) transmit the P-SRS and the SP-SRS. The UE may transmit the A-SRS, based on an SRS request of DCI.

The usage of the SRS ("usage" of the RRC parameter, "SRS-SetUse" of an L1 (Layer-1) parameter) may be, for example, beam management (beamManagement), a codebook (CB), a non-codebook (NCB), antenna switching (antennaSwitcing), or the like. For example, the SRS for the codebook or non-codebook usage may be used to determine a precoder for codebook-based or non-codebook-based uplink shared channel (Physical Uplink Shared Channel (PUSCH)) transmission based on the SRI.

For an SRS for beam management usage, it may be assumed that only one SRS resource for each SRS resource set can be transmitted at a given time instant (given time instant). Note that, when a plurality of SRS resources corresponding to the same time domain behavior in the same Bandwidth Part (BWP) belong to different SRS resource sets, these SRS resources may be transmitted simultaneously.

The SRS resource configuration information element (for example, "SRS-Resource" of the RRC parameter) may include an SRS resource ID (SRS-ResourceId), the number of SRS ports, an SRS port number, the number of transmission combs, SRS resource mapping (for example, time and/or frequency resource location, a resource offset, periodicity of resources, the number of repetitions, the number of SRS symbols, SRS bandwidth, or the like), hopping-related information, an SRS resource type, a sequence ID, spatial relation information, and the like.

Values of the number of transmission combs (transmissionComb) are {2, 4}. Values of the number of SRS ports (nrofSRS-Ports) $N_{ap}^{SRS}$ are {1, 2, 4}. Values of the antenna port number $p_i$ are {1000, 1001, ...}. Values of the number of continuous OFDM symbols of SRS (nrofSymbols) $N_{symb}^{SRS}$ are {1, 2, 4}. Relative to a start position (startPosition) in time domain, offsets $l_{offset}$ of symbols counted from an end of a slot in a time domain backward direction are {0, 1, ..., 5}, and the start position is given by $l_0 = N_{symb}^{slot} - 1 - l_{offset}$.

A configuration of the number of transmission combs may include a comb offset and a cyclic shift (CS) index (CS number).

SRSs from the UE, in which at least one of the comb offset (subcarrier offsets) = {0, 1, ..., $K_{TC}$ - 1} and the CS is different may be multiplexed using the same number of transmission combs, the same RB(s), and the same symbol(s).

The UE may switch Bandwidth Part (BWP) for transmitting the SRS for each slot, and may switch an antenna. The UE may apply at least one of intra-slot hopping and inter-slot hopping to the SRS transmission.

In the existing SRS, the frequency domain start position $k_0^{p\_i}$ for $p_i^{(p\_i)}$ is given by the following equation.

$$k_0^{p\_i} = k^-_0{}^{p\_i} + \sum_{b=0}^{BSRS} K_{TC} M_{SC,\ b}^{SRS} n_b$$

Here, $k^-$ indicates a variable expressed by adding an overline to k, and may be referred to as k bar. $k^-_0{}^{p\_i}$ may be based on a comb offset $K^-_{TC}$. $K_{TC}$ is the number of transmission combs. $M_{SC,\ b}^{SRS}$ is the number of subcarriers used for SRS transmission in an SRS bandwidth $m_{SRS,\ b}$ [RB]. $N_b$ is a constant.

(SRS Antenna Switching)

In Rel-15 NR, antenna switching (which may be referred to as antenna port switching) can be configured as usage of the SRS as described above. SRS antenna switching may be used, for example, when downlink CSI acquisition is performed using an uplink SRS in a time division duplex (TDD) band.

For example, for a UE having a capability that the number of antenna ports available for transmission is less than the number of antenna ports available for reception, UL SRS measurement may be used to determine a DL precoder.

Note that the UE may report UE capability information (for example, an RRC parameter "supportedSRS-TxPortSwitch") indicating a supported SRS transmission port switching pattern to the network. This pattern may be expressed in the form of "txry" such as "t1r2" and "t2r4", which may mean that SRS transmission can be performed using x antenna ports among a total of y antennas (which may be expressed as xTyR). Here, y may correspond to all or a subset of receiving antennas of the UE.

For example, a UE with 2T4R (two transmission ports, four reception ports) may be configured with an SRS resource set that includes two SRS resources each including two ports and whose usage is antenna switching, for DL CSI acquisition.

Note that, when x and y of "txry" have the same value, this may be expressed as xT = xR (for example, 4T = 4R).

(SRS Transmission Power Control)

By using an index l of a power control adjustment state (closed loop state), transmission power ($P_{SRS,b,f,c}(i, q_s, l)$) of the SRS in an SRS transmission occasion (also referred to as a transmission period or the like) i for an active UL BWP b of a carrier f of a serving cell c is given by the following equation, based on $P_{CMAX,f,c}(i)$, $P_{O\_SRS,\ b,f,c}(q_s)$, $M_{SRS,\ b,f,c}(i)$, $\alpha_{SRS,\ b,f,c}(q_s)$, $PL_{b,f,c}(q_d)$, and $h_{b,f,c}(i, l)$.
[Math. 1]

$$P_{SRS.b,f,c}(i, q_s, l)$$
$$= min \begin{cases} P_{CMAX,f,c}(i), \\ P_{O\_SRS.b,f,c}(q_s) + 10 \log_{10}(2^\mu \cdot M_{SRS.b,f,c}(i)) \\ \qquad + \alpha_{SRS.b,f,c}(q_s) \cdot PL_{b,f,c}(q_d) + h_{b,f,c}(i, l) \end{cases} \text{[dBm]}$$

$$(1)$$

The SRS transmission occasion i is a period in which an SRS is transmitted, and may be constituted by, for example, one or more symbols, one or more slots, or the like.

Here, $P_{CMAX,f,c}(i)$ is, for example, the UE maximum output power for the carrier f of the serving cell c in the SRS transmission occasion i. $P_{O\_SRS,\ b,f,c}(q_s)$ is a parameter (also referred to as, for example, a parameter related to a transmission power offset, a transmission power offset P0, or a target reception power parameter, or the like) related to target reception power provided by P0 for an active UL BWP b of the carrier f of the serving cell c and an SRS resource set $q_s$ (provided by SRS-ResourceSet and SRS-ResourceSetId).

$M_{SRS,b,f,c}(i)$ is an SRS bandwidth expressed by the number of resource blocks for an SRS transmission occasion i on an active UL BWP b of the serving cell c and the carrier f with subcarrier spacing $\mu$.

$\alpha_{SRS,\ b,f,c}(q_s)$ is provided by $\alpha$ (for example, alpha) for the active UL BWP b of the serving cell c and the carrier f with the subcarrier spacing $\mu$ and the SRS resource set $q_s$. $\alpha$ (for example, alpha) may be defined as a path loss compensation coefficient for UL power control.

$PL_{b, f, c}(q_d)$ is a DL pathloss estimate value [dB] (pathloss estimate [dB], pathloss compensation) calculated by the UE by using an RS resource index $q_d$ for the active DL BWP of the serving cell c and the SRS resource set $q_s$. The RS resource index $q_d$ is a pathloss reference RS (RS for pathloss reference, pathloss (PL)-RS, DL-RS for pathloss measurement, for example, provided by pathlossReferenceRS) associated with the SRS resource set $q_s$, and is an SS/PBCH block index (for example, ssb-Index) or a CSI-RS resource index (for example, csi-RS-Index).

When the UE is not given the path loss reference RS (pathlossReferenceRSs), or before the UE is given a dedicated higher layer parameter, the UE calculates $PL_{b, f, c}(q_d)$ by using the RS resource obtained from the SS/PBCH block used by the UE to acquire a MIB.

$h_{b,f,c}(i, l)$ is the SRS power control adjustment state for the active UL BWP of the carrier f of the serving cell c in the SRS transmission occasion i. When the SRS power control adjustment state configuration (for example, srs-PowerControlAdjustmentStates) indicates the same power control adjustment state for SRS transmission and PUSCH transmission, the current PUSCH power control adjustment state $f_{b, f, c}(i, l)$ is. On the other hand, when the configuration of the SRS power control adjustment state indicates an independent power control adjustment state for the SRS transmission and the PUSCH transmission, the SRS power control adjustment state $h_{b, f, c}(i)$ may be based on $\delta_{SRS, b, f, c}(m)$.

When Transmission Power Control (TPC) accumulation is enabled, $h_{b, f, c}(i)$ may be based on an accumulated value of $\delta_{SRS, b, f, c}(m)$.

When the TPC accumulation is disabled, $h_{b, f, c}(i)$ may be $\delta_{SRS, b, f, c}(i)$ (absolute value).

Here, $\delta_{SRS, b, f, c}(m)$ may be a TPC command value that is coded in combination with another TPC command in a PDCCH including DCI (for example, DCI format 2_3). $\Sigma_{m=0}^{C(Si)-1} \delta_{SRS, b, f, c}(m)$ may be a sum of TPC commands in a set $S_i$ of TPC command values with cardinality $C(S_i)$ that the UE receives on the active UL BWP b of the serving cell c and the carriers f with the subcarrier spacing $\mu$ between $K_{SRS}(i - i_0) - 1$ symbols before the SRS transmission occasion $i - i_0$, and $K_{SRS}(i)$ symbols before the SRS transmission occasion i. Here, $i_0$ may be the smallest positive integer that makes $K_{SRS}(i - i_0) - 1$ symbols before the SRS transmission occasion $i - i_0$ earlier than $K_{SRS}(i)$ symbols before the SRS transmission occasion i.

When the SRS transmission is aperiodic, $K_{SRS}(i)$ may be the number of symbols in the active UL BWP b of the carrier f of the serving cell c after the last symbol of the corresponding PDCCH triggering the SRS transmission and before the first symbol of the SRS transmission. When the SRS transmission is semi-persistent or periodic, $K_{SRS}(i)$ may be the number of $K_{SRS, min}$ symbols equal to a product of the number of symbols per slot $N_{symb}^{slot}$ in the active UL BWP b of the carrier f of the serving cell c and the smallest value of values provided by k2 in PUSCH common configuration information (PUSCH-ConfigCommon).

(Maximum Transmission Power ($P_{CMAX}$))

The maximum transmission power $P_{CMAX}$ is defined for each of FR1, FR2, and an inter-operation case (for example, EN-DC). $P_{CMAX}$ is applied, for example, in each case of a single carrier, CA, and DC. For example, in a case of single-carrier in FR1, $P_{CMAX}$ is defined as in the following Expression (2).

[Math. 2]

$$P_{CMAX\_L.f.c} \le P_{CMAX.f.c} \le P_{CMAX\_H.f.c} \text{ with}$$

$$P_{CMAX\_L.f.c} = MIN \{P_{EMAX.c} - \Delta T_{C.c}, \quad (P_{PowerClass} - \Delta P_{PowerClass}) - MAX(MAX(MPR_c + \Delta MPR_c, A\text{-}MPR_c) + \Delta T_{IB.c} + \Delta T_{C.c} + \Delta T_{RxSRS}, P\text{-}MPR_c) \}$$

$$P_{CMAX\_H.f.c} = MIN \{P_{EMAX.c}, \quad P_{PowerClass} - \Delta P_{PowerClass} \}$$

$$(2)$$

The UE calculates $P_{CMAX}$ using the above Expression (2), and transmits (reports) the calculated $P_{CMAX}$ to the base station (gNB) by using a PHR MAC CE. This allows the base station to know the $P_{CMAX}$ determined by the UE.

The parameters are described below.

$P_{EMAX}$: given by additionalPmax or p-Max information element in RRC information element NR-NS-PmaxList (configured by the base station).

$P_{PowerClass}$: maximum power of the UE specified in specifications, and a parameter that does not consider an allowable error specified in specifications. This parameter is determined by the UE and is known to the base station.

$\Delta P_{PowerClass}$: a parameter indicating power adjustment of a high-power UE based on a specific condition. This parameter is determined by the UE and is known to the base station when the UE supports PC3.

$\Delta T_{IB, c}$: an additional allowable value for the serving cell c of NR Carrier Aggregation (CA), Supplemental UpLink (SUL), and E-UTRA-NR Dual Connectivity (EN-DC). This parameter is defined in specifications.

MPR: maximum power reduction, used to limit UL transmission power.

A-MPR: additional maximum power reduction, used to limit UL transmission power. The sum of the maximum power reductions is max (MPR, A-MPR).

$\Delta$MPR: this indicates the amount of change in MPR.

$\Delta T_{RxSRS}$: a parameter applied at the time of SRS transmission when usage of SRS-ResourceSet is 'antennaSwitching'.

P-MPR: power management maximum power reduction. This parameter is used to ensure compliance with applicable electromagnetic energy absorbing requirements and to address unnecessary radiation/self-sensing requirements when simultaneous transmissions are performed in a plurality of Radio Access Technologies (RATs) in a scenario out of definitions of 3GPP RAN. This parameter is also used to ensure compliance with applicable electromagnetic energy absorbing requirements when a proximity detection is used to address requirements requiring lower maximum output power.

(Port Distribution with Application of TDM)

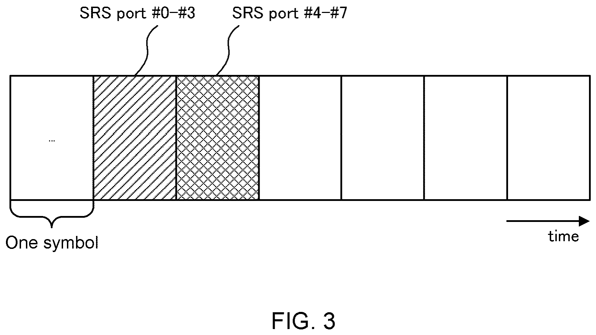

It is under study that, when usage of an SRS is antenna switching/codebook, measurement of an 8-port (8-layer) UL channel by the SRS and mapping of different SRS ports to different OFDM symbols (in other words, TDM) are supported (FIG. 3). It is also conceivable to map all the eight ports to one OFDM symbol.

When applying port distribution (TDM mapping) with TDM applied, because of the small number of cyclic shifts occupied by one OFDM symbol, an effect to be achieved is high robustness against delay. The power per port can be increased. However, a restriction may be applied that the same frequency resource usage/transmission power is used in a plurality of OFDM symbols.

For example, as a configuration of an SRS resource, it is conceivable to allocate four ports per one OFDM symbol and configure 8-port SRS transmission using two or more OFDM symbols (for example, FIG. 3).

The transmission power related to the SRS transmission occasion i corresponding to the SRS transmission configured by the SRS resource is defined in specifications (Expression (1) above). The SRS transmission means SRS transmission in one or a plurality of OFDM symbols. This transmission power is evenly distributed to the antenna ports configured for the SRS (for example, configured by the SRS resource configuration).

(Analysis)

For future radio communication systems (for example 3GPP Rel. 18 and later versions), supporting more than four layers (for example, eight layers) in UL transmission from a terminal (user terminal, User Equipment (UE)) is under study. However, various configurations and the like in a case of supporting SRS ports of more than four ports are not clarified. For example, transmission power control of the SRS is not clarified. This may prevent SRS transmission using more than four SRS ports from being appropriately performed.

For example, when the antenna port configured as described above is divided by a plurality of OFDM symbols, the transmission power of the SRS is interpreted as total transmission power over the plurality of OFDM symbols. In other words, when eight ports are distributed to a plurality of OFDM symbols, it is difficult to boost the transmission power in current specifications.

Thus, the inventors of the present invention came up with the idea of a method capable of appropriately performing SRS transmission using more than four SRS ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

As an SRS in the present disclosure, at least one of a P-SRS, an SP-SRS, and an AP-SRS may be used. In the present disclosure, a P SRS and a P-SRS may be interchangeably interpreted. In the present disclosure, an SP SRS and an SP-SRS may be interchangeably interpreted. In the present disclosure, an AP SRS and an AP-SRS may be interchangeably interpreted. A resource set group and an SRS resource set group may be interchangeably interpreted.

In the present disclosure, xTyR being applied, "txry" being transmitted (reported) in UE capability information (for example, supportedSRS-TxPortSwitch), and xTyR being configured in higher layer signaling/physical layer signaling may be interchangeably interpreted. In the present disclosure, UL transmission with more than four layers may be applied. The processing of the present disclosure may be applied to a UE supporting the number of layers being more than four.

In the present disclosure, a port, an SRS port, a transmission port, an SRS transmission port, and an antenna port may be interchangeably interpreted. In the present disclosure, a reception port, an antenna port, and a UE antenna port may be interchangeably interpreted.

In the present disclosure, ports #0 to #7 may be interpreted as ports #1000 to #1007. In other words, for the ports #0 to #7, 1000 may be added to each port number.

(Radio Communication Method)

<Zeroth Embodiment>

When a configuration (for example, a configuration of an SRS resource/SRS resource set) indicating that different SRS ports are mapped to different Orthogonal Frequency Division Multiplexing (OFDM) symbols (different SRS ports are sounded in different OFDM symbols) (for example, FIG. 3) is received, transmission power of an SRS (for example, $P_{SRS, b, f, c}$) may be equally divided by one or a plurality of specific units corresponding to the SRS resource. This maximizes the transmission power of the SRS.

[Option 1]

The one or a plurality of specific units may be at least one of following options 1-1 to 1-3.

<<Option 1-1>>

Port (SRS port). For example, when $P_{SRS, b, f, c}$ is divided by the SRS ports, the power per SRS port is $P_{SRS, b, f, c}/N1$ (N is the number of SRS ports). The SRS ports (the number of SRS ports) may be configured/indicated for the UE by higher layer signaling/physical layer signaling, or may be determined by the UE.

<<Option 1-2>>

OFDM symbol. For example, when $P_{SRS, b, f, c}$ is divided by the OFDM symbols to be configured for SRS, the power per symbol is $P_{SRS, b, f, c}/N2$ (N2 is the number of OFDM symbols). The OFDM symbol(s) is an OFDM symbol used for one repetition when repetition transmission is configured.

<<Option 1-3>>

A subset of SRS ports (OFDM symbols used for the subset). For example, $P_{SRS, b, f, c}$ is divided by a subset of SRS ports configured for SRS. The power per subset is $P_{SRS, b, f, c}/N3$ (N3 is the subset of ports configured).

The options 1-1 to 1-3 may be implemented in combination as appropriate. For example, when the options 1-1 and 1-2 are combined, power may be evenly distributed to each SRS port configured for each symbol. For example, when the options 1-2 and 1-3 are combined, power may be evenly distributed to each subset of SRS ports configured for each symbol.

[Option 2]

Restrictions/conditions for applying the present embodiment may be at least one of the following options 2-1 to 2-2. Satisfying the following restrictions/conditions may correspond to an implicit indication to apply the present embodiment.

<<Option 2-1>>

Usage of SRS. For example, the present embodiment may be applied when at least one of antenna switching, a codebook, a non-codebook, and beam management is configured as usage of SRS.

<<Option 2-2>>

SRS behavior in the time domain. For example, the present embodiment may be applied to only aperiodic, only semi-persistent, only periodic, only a subset of {aperiodic, semi-persistent, periodic}, or all of {aperiodic, semi-persistent, periodic}.

[Examples of Description in Specifications]

The present embodiment may be described as the following examples 1 to 3 in specifications. Note that described contents in specifications corresponds to contents executed by terminals. Note that $P^-$ indicates a variable expressed by adding an overline to P, and may be referred to as P bar.

<<Example 1>>

For SRS, the UE equally divides a linear value $\bar{P}_{SRS,b,f,c}(i, q_s, l)$ of transmission power $P_{SRS,b,f,c}(i, q_s, l)$ among antenna ports configured in a subset of SRS ports in an active UL BWP b of a carrier f of a serving cell c.

<<Example 2>>

In a case of SRS not configured with port distribution with TDM applied, the UE equally divides a linear value $\bar{P}_{SRS,b,f,c}(i, q_s, l)$ of transmission power $P_{SRS,b,f,c}(i, q_s, l)$ among antenna ports of SRS in an active UL BWP b of a carrier f of a serving cell c.

In a case of SRS configured with port distribution with TDM applied, the UE equally divides a linear value $\bar{P}_{SRS,b,f,c}(i, q_s, l)$ of transmission power $P_{SRS,b,f,c}(i, q_s, l)$ among antenna ports configured in a subset of SRS ports in an active UL BWP b of a carrier f of a serving cell c.

<<Example 3>>

In a case of SRS not configured with port distribution with TDM applied, the UE equally divides a linear value $\bar{P}_{SRS,b,f,c}(i, q_s, l)$ of transmission power $P_{SRS,b,f,c}(i, q_s, l)$ among antenna ports of SRS in an active UL BWP b of a carrier f of a serving cell c.

In the case of SRS configured with port distribution with TDM applied and the UE indicates a specific UE capability report, the UE equally divides a linear value $\bar{P}_{SRS,b,f,c}(i, q_s, l)$ of transmission power $P_{SRS,b,f,c}(i, q_s, l)$ among antenna ports configured in a subset of SRS ports in an active UL BWP b of a carrier f of a serving cell c.

[Variations]

When different SRS ports are measured in different OFDM symbols according to the SRS resource configuration, the transmission power of the SRS (for example, $P_{SRS,b,f,c}$) is considered for each OFDM symbol in the SRS transmission occasion.

For example, when the UE transmits an SRS based on a configuration of an SRS resource set in the active UL BWP b of the carrier c of the serving cell c by using an SRS power control adjustment state of index l, the UE determines SRS transmission power $P_{SRS,b,f,c}(i, q_s, l)$ per OFDM symbol in SRS transmission occasion i.

<UE Power Amplifier (PA) Architecture>

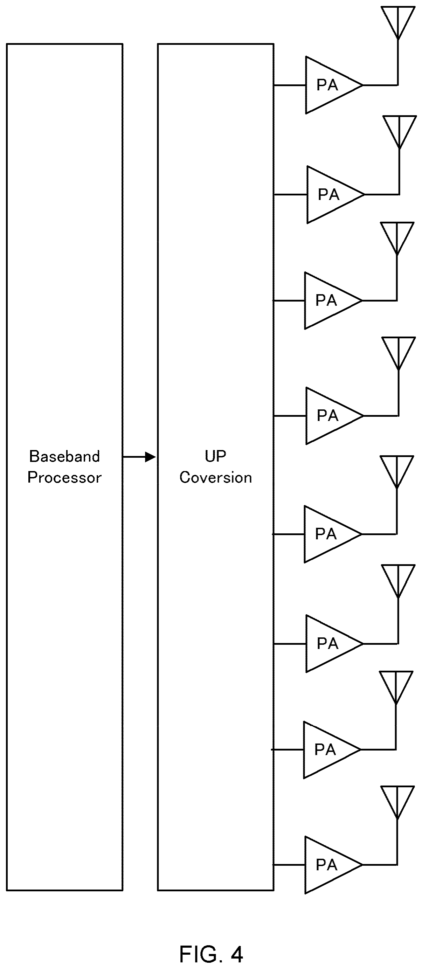

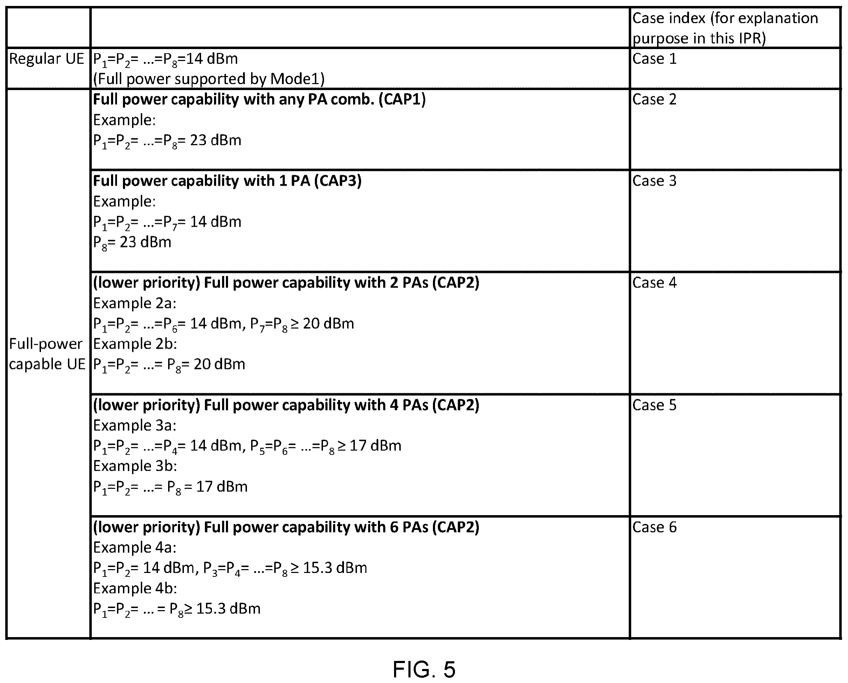

When transmitting a signal, the signal is sent from a baseband processor to PAs via upconversion to be amplified, and sent to antennas (FIG. 4). As illustrated in FIG. 5, a plurality of cases are assumed as the transmission power. For example, in case 1, power of the amplified signal is 14 [dBm] at each port.

<Actual Maximum Transmission Power>

In each case in FIG. 5, when ports #0 to #3 are arranged in a given symbol and ports #4 to #7 are arranged in another symbol, the transmission power and the maximum transmission power of each port are assumed to be as follows, for example.

- In case 1 {14, 14, 14, 14, 14, 14} [dBm], the maximum transmission power is 20 dBm/symbol.
- In case 2 {23, 23, 23, 23, 23, 23} [dBm], there is no restriction such that the maximum transmission power is less than 23 dBm.
- In case 3 {14, 14, 14, 14, 14, 23} [dBm], the maximum transmission power is 20 dBm in a given symbol and 23 dBm in another symbol.
- In case 4 {14, 14, 14, 14, 20, 20} [dBm], the maximum transmission power is 20 dBm in a given symbol and 23 dBm in another symbol.
- In case 5 {14, 14, 14, 17, 17, 17} [dBm], the maximum transmission power is 20 dBm in a given symbol and 23 dBm in another symbol.
- In case 6 {14, 14, 15.3, 15.3, 15.3, 15.3, 15.3}, the maximum transmission power is equal to or higher than 20 dBm in a given symbol and is equal to or higher than 21.3 dBm in another symbol.

Different OFDM symbols used for SRS resources may use different transmission power depending on a UE PA architecture. This may affect how CSI is measured over a subset of ports.

<Analysis>

In a plurality of OFDM symbols used for SRS resources, one $P_{CMAX}$ is interpreted as the upper limit of transmission power. However, due to the UE PA architecture, actual maximum transmission power is different for each OFDM symbol (different ports are transmitted).

For example, it is also conceivable that a conservative $P_{CMAX}$ is studied. For example, in case 3 of the UE PA architecture in FIG. 5, the symbols in SRS ports #0 - #3 fail to achieve 23 dBm, and thus it is conceivable to set $P_{CMAX}$ as 20 dBm.

In other words, the UE preferably adjusts SRS transmission power, based on an SRS port to be transmitted/a type of PA architecture of the UE. Hereinafter, an adjustment method is described in detail in first to third embodiments.

<First Embodiment>

The UE may perform power adjustment on the maximum transmission power (for example, $P_{CMAX}$) for SRS transmission to reflect actual maximum transmission power, based on SRS ports to be transmitted/a type of PA architecture of the UE. For example, although restriction of $P_{CMAX}$ as shown in Expression (2) above is defined in Rel. 17, a different equation may be used in the present embodiment.

[Option 1]

A power adjustment factor is at least one of the following options 1-1 and 1-2.

Option 1-1: $\Delta T_{RxsRS}$ of Expression (2) is applied as it is.
Option 1-2: a new parameter is added to Expression (2). For example, the following Expression (3) to which $\Delta T_{RxsRS\text{-}NEW}$ is added may be applied.

[Math. 3]

$$P_{CMAX\_L.f.c} \leq \quad P_{CMAX.f.c} \quad \leq \quad P_{CMAX\_H.f.c} \text{ with}$$

$$P_{CMAX\_L.f.c} = MIN \{P_{EMAX.c} - \Delta T_{C.c}, \quad (P_{PowerClass} - \Delta P_{PowerClass}) - MAX(MAX(MPR_c + \Delta MPR_c, A\text{-}MPR_c) + \Delta T_{IB.c} + \Delta T_{C.c} + \Delta T_{RxSRS} + \Delta T_{RxSRS\_NEW}, P\text{-}MPR_c) \}$$

$$P_{CMAX\_H.f.c} = MIN \{P_{EMAX.c}, \quad P_{PowerClass} - \Delta P_{PowerClass} \}$$

$$(3)$$

[Option 2]

The place to which the coefficient is applied may be at least one of the following options 2-1 to 2-3. For example, a specific coefficient may be applied (for example, added/subtracted/multiplied) to at least one expression of options 2-1 to 2-3. The expressions of options 2-1 to 2-3 may be Expression (2) or (3) described above.

Option 2-1: inequality for determining $P_{CMAX, f, c}$.
Option 2-2: expression for determining the lower-limit band ($P_{CMAX, L, f, c}$).
Option 2-3: expression for determining the upper-limit band ($P_{CMAX, H, f, c}$).

[Option 3]

A condition for applying the present embodiment is at least one of the following options 3-1 and 3-2.

Option 3-1: the present embodiment is applied to an SRS whose port index is larger (or smaller) than a given threshold value. For example, when four ports are present for each subset/OFDM symbol in an 8-port SRS, the example of the present embodiment may be applied to SRS ports #4 to #7. For example, in the case of 8-port SRS, when two ports are present for each subset, the example of the present embodiment may not be applied only to ports #6 and #7 of the SRS.
Option 3-2: the example of the present embodiment is applied only to SRS with a port index in a specific subset.

According to the present embodiment, the transmission power of the SRS is maximized based on its actual PA architecture.

<Second Embodiment>

A UE may perform power adjustment on a value related to a TPC (TPC command) for SRS transmission to reflect actual maximum transmission power, based on SRS ports to be transmitted/a type of PA architecture of the UE. For example, although $h_{b, f, c}$ (i) corresponding to the TPC as shown in Expression (2) described above is used in Rel. 17, a specific coefficient may be applied to (for example, added to/subtracted from/multiplied by) $h_{b, f, c}$ (i, l) in the present embodiment.

[Option 1]

A power adjustment factor is at least one of the following options 1-1 and 1-2.

Option 1-1: $\Delta T_{RxSRS}$ of Expression (2) is applied as it is.
Option 1-2: a new parameter is added to Expression (2). For example, the above Expression (3) to which $\Delta T_{RxsRS\text{-}NEW}$ is added may be applied.

[Option 2]

The place to which the coefficient is applied may be at least one of the following options 2-1 to 2-2. For example, a specific coefficient may be applied (for example, added/subtracted/multiplied) to at least one expression of options 2-1 to 2-2.

Option 2-1: lower equation of Expression (2) or (3) (for example. after $P_{0\_SRS, b, f, c}$).
Option 2-2: above equation of Expression (2) or (3) (for example, after $P_{CMAX, f, c}$).

[Option 3]

A condition for applying the present embodiment is at least one of the following options 3-1 and 3-2.

Option 3-1: the present embodiment is applied to an SRS whose port index is larger (or smaller) than a given threshold value. For example, when four ports are present for each subset/OFDM symbol in an 8-port SRS, the example of the present embodiment may be applied to SRS ports #4 to #7. For example, in the case of 8-port SRS, when two ports are present for each subset, the example of the present embodiment may not be applied only to ports #6 and #7 of the SRS.
Option 3-2: the example of the present embodiment is applied only to SRS with a port index in a specific subset.

According to the present embodiment, the transmission power of the SRS is maximized based on its actual PA architecture.

<Third Embodiment>

The UE may perform power adjustment on calculated SRS transmission power (for example, $P_{SRS, b, f, c}(i, q_s, l)$) to reflect actual maximum transmission power, based on SRS ports to be transmitted/a type of PA architecture of the UE.

[Option 1]

A power adjustment factor is at least one of the following options 1-1 and 1-2.

Option 1-1: $\Delta T_{RxSRS}$ of Expression (2) is applied as it is.
Option 1-2: a new parameter is added to Expression (2). For example, the above Expression (3) to which $\Delta T_{RxsRS-NEW}$ is added may be applied.

[Option 2]

The place to which the coefficient is applied may be following option 2-1. For example, a specific coefficient may be applied (for example, added/subtracted/multiplied) to expression of option 2-1.
Option 2-1: after $P_{SRS, b, f, c}(i, q_s, l)$ of Expression (2) or (3).

[Option 3]

A condition for applying the present embodiment is at least one of the following options 3-1 and 3-2.

Option 3-1: the present embodiment is applied to an SRS whose port index is larger (or smaller) than a given threshold value. For example, when four ports are present for each subset/OFDM symbol in an 8-port SRS, the example of the present embodiment may be applied to SRS ports #4 to #7. For example, in the case of 8-port SRS, when two ports are present for each subset, the example of the present embodiment may not be applied only to ports #6 and #7 of the SRS.
Option 3-2: the example of the present embodiment is applied only to SRS with a port index in a specific subset.

According to the present embodiment, the transmission power of the SRS is maximized based on its actual PA architecture.

<Variations>

The examples of the first to third embodiments may be commonly applied to a set of SRS transmissions. The "set of SRS transmissions" may be interpreted as at least one of the followings.

(1) A subset of all SRS ports to be configured.
(2) All repetition of SRS transmission.
(3) All SRS symbols. In this case, for example, transmission power of the OFDM symbols is the same, and thus terminal implementation is simplified.
(4) A part of the subset(s) of the SRS ports to be configured.
(5) A part of SRS ports.

When (1) to (3) are applied, the transmission power of SRS is the same among specific SRS transmissions configured by an SRS resource, and thus the terminal implementation is simplified. The UE may select the minimum/-maximum power value (SRS corresponding to the power value) calculated for each SRS subset/SRS repetition/SRS symbol and apply each embodiment.

$P_{CMAX}$ may be defined for each port (or for each port subset).

Option 3-2 of the first to third embodiments, the method of determining/identifying "SRS with port index in specific subset" may be at least one of the following (1) to (3).

(1) The UE transmits the SRS port in each subset and the number of subsets as UE capability information. The UE may be configured/indicated with a specific subset by RRC/MAC CE/DCI.

(2) When SRS ports are divided into a plurality of subsets, the UE may be configured/indicated with an identifier of each subset through RRC/MAC CE/DCI. The UE may be configured/indicated with the divided subsets by RRC/MAC CE/DCI.

(3) The UE may be configured/indicated with association between the SRS port and the OFDM symbol used for the transmission of the SRS port by RRC/MAC CE/DCI. The SRS ports included in the same OFDM symbol may be included in the same subset.

<Fourth Embodiment>

In the first to third embodiments, the UE may transmit/report a coefficient used for adjustment by using at least one of report/information/signal/channel and like in the following options (the coefficient may be included in the information/signal/channel and the like).

Option 4-1-1: UE capability information.

Option 4-1-2: Reporting in a MAC CE (for example, Power Headroom Report (PHR)/Buffer Status Report (BSR)) in a UL PUSCH.

Option 4-1-3: UCI on PUCCH.

Option 4-1-4: UCI on PUSCH.

The UE may transmit specific unit(s)/location(s) to apply one or more coefficients with the coefficients or the specific unit(s)/location(s) may be defined in advance in specifications.

[Variations]

Information related to the PA architecture of the UE may be transmitted/reported by methods of options 4-1-1 to 4-1-2. This improves awareness of the gNB with respect to transmission power of the UE. In this case, the "information related to the PA architecture of the UE" may be at least one of the following.

Option 4-2-1: maximum output power per port.

Option 4-2-2: identification information of the PA architecture (for example, the case index in FIG. 5).

According to the fourth embodiment, quality of UL/DL channel measurement based on an SRS is improved.

<Fifth Embodiment>

When a UE receives both a configuration of TDM port distribution (different SRS ports are mapped to OFDM symbols) and a configuration of SRS repetition, the UE may drop only a part of the SRS (SRS symbols) in the SRS repetition according to collision with other UL transmission. Note that the TDM port distribution may indicate mapping of different SRS ports to different OFDM symbols (in other word, TDM), as shown in the example of FIG. 3.

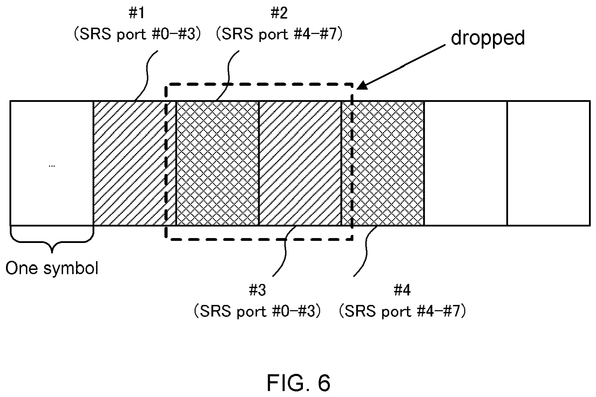

The UE may drop only SRS transmissions from SRS ports in symbols that overlap other UL transmissions, and not drop SRS transmissions from SRS ports in other symbols. For example, in the example of FIG. 6, the UE drops only SRSs #2 and #3. This enables reduction of the number of SRSs to be dropped, compared to a case where all SRSs (for example, all SRSs of repetition transmission corresponding to a specific SRS) are dropped. Channel measurement for all ports may be possible regardless of overlap with other UL transmissions.

For example, when the SRS according to the TDM port distribution and the SRS repetition are simultaneously configured, the UE may apply the following option 5-1 or 5-2 as a collision processing rule for collision between the SRS and other UL transmission.

> Option 5-1: for SRS symbols with repetition, when the SRS symbols collide with other UL transmissions, the UE drops all SRS transmissions in the repetition transmission.
> Option 5-2: when any of the SRS symbols with repetition collides with other UL transmission, the UE drops only the SRS transmission that actually collides with other UL transmission altogether.

According to the present embodiment, the SRS transmission occasion (corresponding to an occasion to measure a CSI) is maximized. For example, when the present embodiment is combined with the first to third embodiments and the fourth embodiment, a NW (base station) can measure 8 ports assuming appropriate transmission power and obtain an accurate UL measurement result.

[Supplements]

When UL transmissions overlap, the UE may drop a UL transmission with a lower priority according to a given priority. For example, the following UL transmissions may be assigned a higher priority. The priority may be defined in specifications or may be configured/indicated for the UE by higher layer signaling/physical layer signaling.

- PRACH transmission on a PCell.
- PUCCH or PUSCH transmission with a large priority index.
- PUCCH or PUSCH transmission with the same priority index.
- At least one of a PUCCH transmission with HARQ-ACK information of a priority index, an SR, a link recovery request (LRR), and a PUSCH transmission with HARQ-ACK information.
- PUCCH transmission with CSI or PUSCH transmission with CSI.
- PUSCH transmission without HARQ-ACK information or CSI of priority index, PUSCH transmission in type 2 random access procedure, PUSCH transmission on a PCell.
- SRS transmission with higher priority than semi-persistent/periodic SRS, or PRACH transmission in a serving cell other than a PCell.

In a case of the same priority and an operation with the carrier aggregation, the UE may preferentially perform the transmission in a primary cell of an MCG or an SCG over the transmission in a secondary cell. In a case of the same priority and an operation using two UL carriers, the UE may prioritize transmission on a carrier on which the UE is configured to transmit PUCCH. In a case of no PUCCH being configured on both the two UL carriers, the UE may prioritize transmission on a non-supplementary UL carrier.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.
When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:

- supporting specific processing/operation/control/information for at least one of the above-described embodiments;
- supporting mapping of different SRS ports to different OFDM symbols; and
- the number of SRS ports to support.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Note)

Regarding one embodiment of the present disclosure, the following supplementary notes of the invention will be given.

{Supplementary Note 1}

A terminal including:

a receiving section that receives a configuration indicating that different Sounding Reference Signal (SRS) ports are mapped to different Orthogonal Frequency Division Multiplexing (OFDM) symbols; and
a control section that equally divides transmission power of SRS by a specific unit.

{Supplementary Note 2}

The terminal according to supplementary note 1, wherein the control section equally divides the transmission power by the SRS ports, by the OFDM symbols, or by a subset of the SRS ports.

{Supplementary Note 3}

The terminal according to supplementary note 1 or 2, wherein the control section adjusts maximum transmission power for the SRS transmission, a value related to Transmission Power Control (TPC), or calculated SRS transmission power, based on the SRS ports or a type of Power Amplifier (PA) architecture.

{Supplementary Note 4}

The terminal according to any one of supplementary notes 1 to 3, wherein
the control section drops only a part of the SRS in SRS repetition transmission in accordance with a collision with another uplink (UL) transmission when both the configuration and a configuration of the SRS repetition transmission are received.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

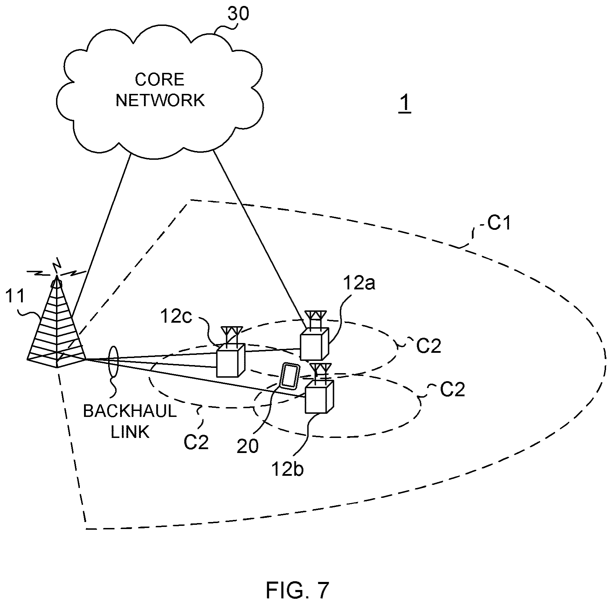

FIG. 7 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

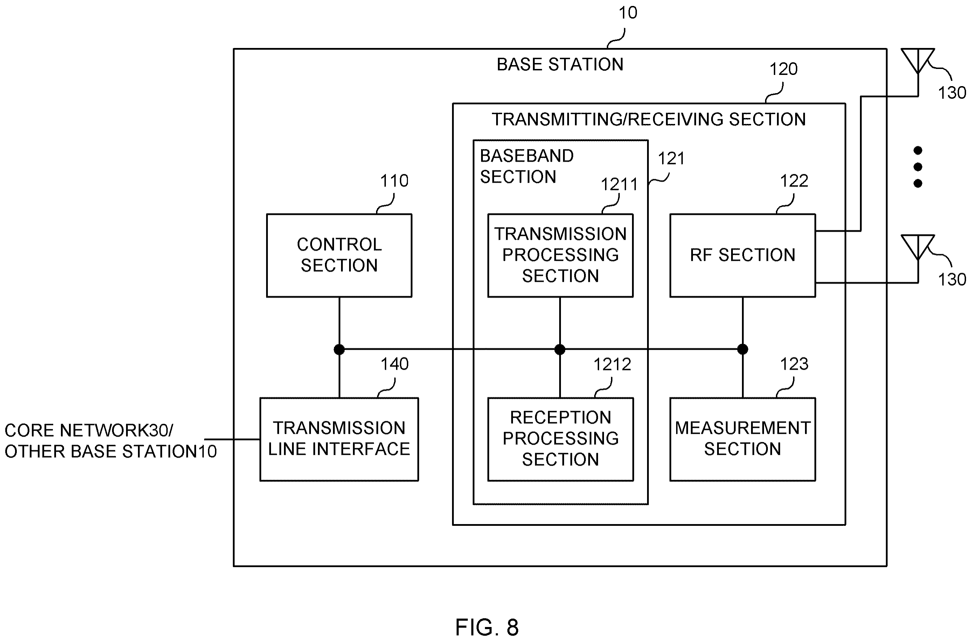

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration indicating that different Sounding Reference Signal (SRS) ports are mapped to different Orthogonal Frequency Division Multiplexing (OFDM) symbols.

The control section 110 may control reception of the SRS for which transmission power is equally divided by a specific unit.

(User Terminal)

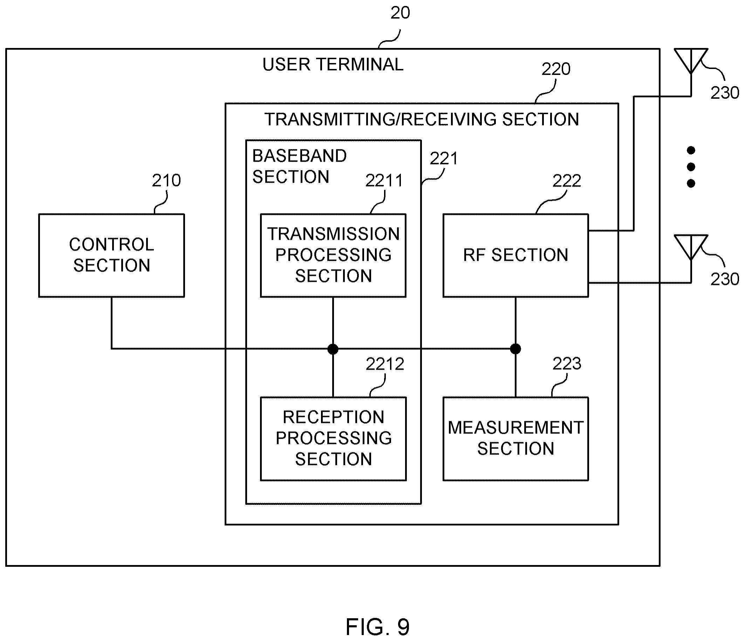

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration indicating that different Sounding Reference Signal (SRS) ports are mapped to different Orthogonal Frequency Division Multiplexing (OFDM) symbols.

The control section 210 may equally divide transmission power of SRS by a specific unit.

The control section 210 may equally divide the transmission power by the SRS ports, by the OFDM symbols, or by a subset of the SRS ports.

The control section 210 may adjust maximum transmission power for the SRS transmission, a value related to Transmission Power Control (TPC), or calculated SRS transmission power, based on the SRS ports or a type of Power Amplifier (PA) architecture.

The control section 210 may drop only a part of the SRS in SRS repetition transmission in accordance with a collision with another uplink (UL) transmission when both the configuration and a configuration of the SRS repetition transmission are received.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

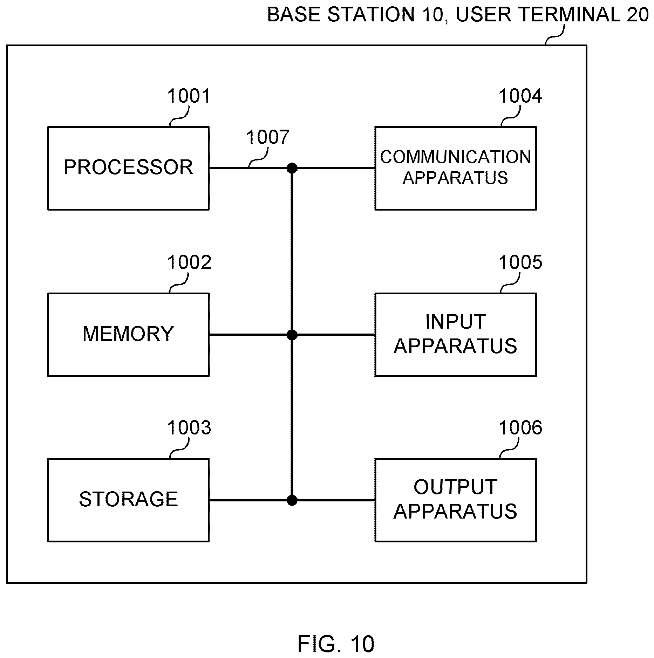

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

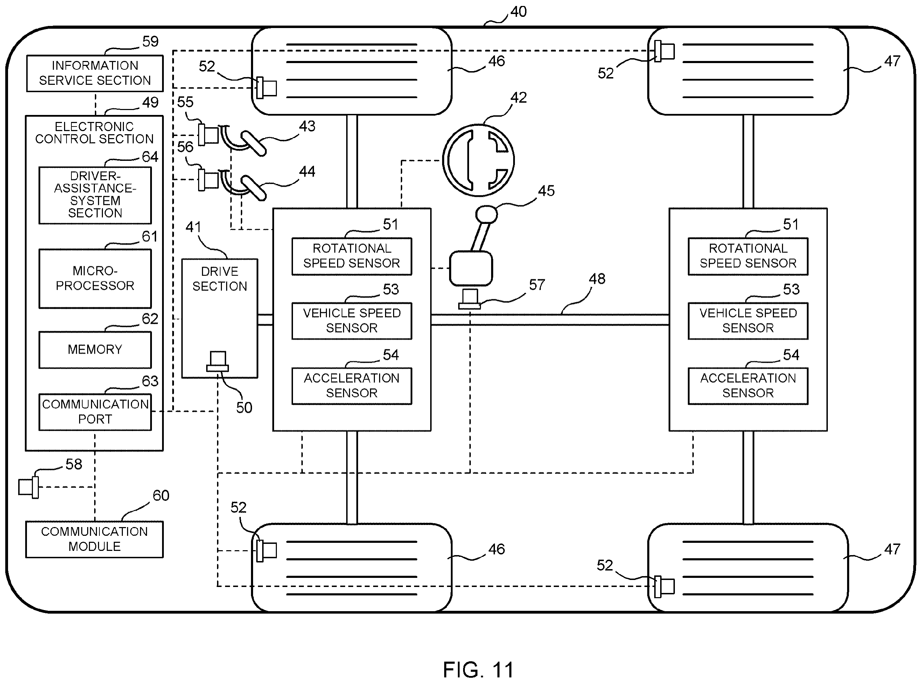

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1.    A terminal comprising:

> a receiving section that receives a configuration indicating that different Sounding Reference Signal (SRS) ports are mapped to different Orthogonal Frequency Division Multiplexing (OFDM) symbols; and

a control section that equally divides transmission power of SRS by a specific unit.

2. The terminal according to claim 1, wherein
the control section equally divides the transmission power by the SRS ports, by the OFDM symbols, or by subsets of the SRS ports.

3. The terminal according to claim 1, wherein
the control section adjusts maximum transmission power for the SRS transmission, a value related to Transmission Power Control (TPC), or calculated SRS transmission power, based on the SRS ports or a type of Power Amplifier (PA) architecture.

4. The terminal according to claim 1, wherein
the control section drops only a part of the SRS in SRS repetition transmission in accordance with a collision with another uplink (UL) transmission when both the configuration and a configuration of the SRS repetition transmission are received.

5. A radio communication method for a terminal, the radio communication method comprising:

receiving a configuration indicating that different Sounding Reference Signal (SRS) ports are mapped to different Orthogonal Frequency Division Multiplexing (OFDM) symbols; and
equally dividing transmission power of SRS by a specific unit.

6. A base station comprising:

a transmitting section that transmits a configuration indicating that different Sounding Reference Signal (SRS) ports are mapped to different Orthogonal Frequency Division Multiplexing (OFDM) symbols; and
a control section that controls reception of the SRS for which transmission power is equally divided by a specific unit.

```
SRS-ResourceSet ::=                           SEQUENCE {
    srs-ResourceSetId                             SRS-ResourceSetId,
    srs-ResourceIdList                            SEQUENCE (SIZE(1..maxNrofSRS-ResourcesPerSet)) OF SRS-ResourceId
OPTIONAL, -- Cond Setup
    resourceType                                  CHOICE {
        aperiodic                                     SEQUENCE {
            aperiodicSRS-ResourceTrigger                  INTEGER (1..maxNrofSRS-TriggerStates-1),
            csi-RS                                        NZP-CSI-RS-ResourceId                                  OPTIONAL,
-- Cond NonCodebook
            slotOffset                                    INTEGER (1..32)                                       OPTIONAL,
-- Need S
            ...,
            [[
            aperiodicSRS-ResourceTriggerList              SEQUENCE (SIZE(1..maxNrofSRS-TriggerStates-2))
                                                              OF INTEGER (1..maxNrofSRS-TriggerStates-1)    OPTIONAL
-- Need M
            ]]
        },
        semi-persistent                           SEQUENCE {
            associatedCSI-RS                              NZP-CSI-RS-ResourceId                                 OPTIONAL,
-- Cond NonCodebook
            ...
        },
        periodic                                  SEQUENCE {
            associatedCSI-RS                              NZP-CSI-RS-ResourceId                                 OPTIONAL,
-- Cond NonCodebook
            ...
        }
    },
    usage                                         ENUMERATED {beamManagement, codebook, nonCodebook, antennaSwitching},
    alpha                                         Alpha                                                         OPTIONAL,
-- Need S
    p0                                            INTEGER (-202..24)                                            OPTIONAL,
-- Cond Setup
    pathlossReferenceRS                           PathlossReferenceRS-Config                                    OPTIONAL,
-- Need M
    srs-PowerControlAdjustmentStates              ENUMERATED { sameAsFci2, separateClosedLoop}                  OPTIONAL,
-- Need S
    ...,
    [[
    pathlossReferenceRSList-r16                   SetupRelease { PathlossReferenceRSList-r16}                   OPTIONAL
-- Need M
    ]]
}
```

FIG. 1

EP 4 697 822 A1

```
SRS-Resource ::=                         SEQUENCE {
    srs-ResourceId                           SRS-ResourceId,
    nrofSRS-Ports                            ENUMERATED {port1, ports2,
ports4},
    ptrs-PortIndex                           ENUMERATED {n0, n1 }
    transmissionComb                         CHOICE {
        n2                                       SEQUENCE {
            combOffset-n2                            INTEGER (0..1),
            cyclicShift-n2                           INTEGER (0..7)
        },
        n4                                       SEQUENCE {
            combOffset-n4                            INTEGER (0..3),
            cyclicShift-n4                           INTEGER (0..11)
        }
    },
    resourceMapping                          SEQUENCE {
        startPosition                            INTEGER (0..5),
        nrofSymbols                              ENUMERATED {n1, n2, n4},
        repetitionFactor                         ENUMERATED {n1, n2, n4}
    },
    freqDomainPosition                       INTEGER (0..67),
    freqDomainShift                          INTEGER (0..268),
    freqHopping                              SEQUENCE {
        c-SRS                                    INTEGER (0..63),
        b-SRS                                    INTEGER (0..3),
        b-hop                                    INTEGER (0..3)
    },
    groupOrSequenceHopping                   ENUMERATED { neither,
groupHopping, sequenceHopping },
    resourceType                             CHOICE {
        aperiodic                                SEQUENCE {
            ...
        },
        semi-persistent                          SEQUENCE {
            periodicityAndOffset-sp                  SRS-
PeriodicityAndOffset,
            ...
        },
        periodic                                 SEQUENCE {
            periodicityAndOffset-p                   SRS-
PeriodicityAndOffset,
            ...
        }
    },
    sequenceId                               INTEGER (0..1023),
    spatialRelationInfo                      SRS-SpatialRelationInfo
    ...,
    [[
    resourceMapping-r16                      SEQUENCE {
        startPosition-r16                        INTEGER (0..13),
        nrofSymbols-r16                          ENUMERATED {n1, n2, n4},
        repetitionFactor-r16                     ENUMERATED {n1, n2, n4}
    }
    ]]
```

FIG. 2

SRS port #0-#3    SRS port #4-#7

One symbol

time

FIG. 3

FIG. 4

| | | Case index (for explanation purpose in this IPR) |
|---|---|---|
| Regular UE | $P_1=P_2=\ldots=P_8=14$ dBm<br>(Full power supported by Mode1) | Case 1 |
| Full-power capable UE | **Full power capability with any PA comb. (CAP1)**<br>Example:<br>$P_1=P_2=\ldots=P_8=23$ dBm | Case 2 |
| | **Full power capability with 1 PA (CAP3)**<br>Example:<br>$P_1=P_2=\ldots=P_7=14$ dBm<br>$P_8=23$ dBm | Case 3 |
| | **(lower priority) Full power capability with 2 PAs (CAP2)**<br>Example 2a:<br>$P_1=P_2=\ldots=P_6=14$ dBm, $P_7=P_8\geq20$ dBm<br>Example 2b:<br>$P_1=P_2=\ldots=P_8=20$ dBm | Case 4 |
| | **(lower priority) Full power capability with 4 PAs (CAP2)**<br>Example 3a:<br>$P_1=P_2=\ldots=P_4=14$ dBm, $P_5=P_6=\ldots=P_8\geq17$ dBm<br>Example 3b:<br>$P_1=P_2=\ldots=P_8=17$ dBm | Case 5 |
| | **(lower priority) Full power capability with 6 PAs (CAP2)**<br>Example 4a:<br>$P_1=P_2=14$ dBm, $P_3=P_4=\ldots=P_8\geq15.3$ dBm<br>Example 4b:<br>$P_1=P_2=\ldots=P_8\geq15.3$ dBm | Case 6 |

<div align="center">FIG. 5</div>

FIG. 6

FIG. 7

FIG. 8

EP 4 697 822 A1

FIG. 9

EP 4 697 822 A1

BASE STATION 10, USER TERMINAL 20

1001

PROCESSOR

1007

COMMUNICATION APPARATUS

1004

1002

MEMORY

1005

INPUT APPARATUS

1003

STORAGE

1006

OUTPUT APPARATUS

FIG. 10

40

47

51 ROTATIONAL SPEED SENSOR
53 VEHICLE SPEED SENSOR
54 ACCELERATION SENSOR

47

52

48

52

45
42
57

46

51 ROTATIONAL SPEED SENSOR
53 VEHICLE SPEED SENSOR
54 ACCELERATION SENSOR

46

43
44

52

55
56

41 DRIVE SECTION
50

52

59 INFORMATION SERVICE SECTION
49 ELECTRONIC CONTROL SECTION
64 DRIVER-ASSISTANCE-SYSTEM SECTION
61 MICRO-PROCESSOR
62 MEMORY
63 COMMUNICATION PORT

58

60 COMMUNICATION MODULE

FIG. 11

## INTERNATIONAL SEARCH REPORT

| International application No. |
|---|
| **PCT/JP2023/015223** |

| | |
|---|---|
| **A.** | **CLASSIFICATION OF SUBJECT MATTER** |

*H04W 52/32*(2009.01)i
FI: H04W52/32

According to International Patent Classification (IPC) or to both national classification and IPC

| | |
|---|---|
| **B.** | **FIELDS SEARCHED** |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CATT. Discussion on Rel-18 SRS enhancement[online]. 3GPP TSG RAN WG1 #112b-e R1-2302684. 07 April 2023, [retrieved on 16 October 2023], Internet: <URL:https://www.3gpp.org/ftp/tsg_ran/WG1_RL1/TSGR1_112b-e/Docs/R1-2302684.zip> in particular, sections 2.2.2, 2.2.3 | 1-2, 5-6 |
| Y | in particular, sections 2.2.2, 2.2.3 | 3-4 |
| Y | OPPO. SRS enhancement targeting TDD CJT and 8 TX operation[online]. 3GPP TSG RAN WG1 #112b-e R1-2302536. 07 April 2023, [retrieved on 16 October 2023], Internet: <URL:https://www.3gpp.org/ftp/tsg_ran/WG1_RL1/TSGR1_112b-e/Docs/R1-2302536.zip> in particular, section 2.2 | 3 |
| Y | SAMSUNG. Views on SRS enhancements[online]. 3GPP TSG RAN WG1 #112 R1-2301251. 17 February 2023, [retrieved on 16 October 2023], Internet: <URL:https://www.3gpp.org/ftp/tsg_ran/WG1_RL1/TSGR1_112/Docs/R1-2301251.zip> in particular, sections 3.4, 3.6 | 4 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2023** | **24 October 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300*, April 2010